# EUROPEAN PATENT APPLICATION

(11) **EP 2 270 471 A1**
(43) Date of publication of application: **05.01.2011**
(21) Application number: 10251201.9
(22) Date of filing: 02.07.2010
(51) Int. Cl.: G01N 21/33, G01N 21/85

(54) **Monitoring and control of liquid additive**

(30) Priority: 03.07.2009 GB 0911766
(71) Applicant: Aquanet International Limited, Hambridge Lane Newbury Berkshire RG14 5TL (GB)
(72) Inventor: The designation of the inventor has not yet been filed
(74) Representative: Badger, John Raymond

(57) **Abstract**

Apparatus and a method for monitoring and controlling the concentration of an additive in a liquid circulation system comprises providing in the system a sensor 20 having a UV (ultra violet) transparent section through which, in use, liquid circulates, a UV light source 31 to direct light to the UV transparent section at a known wavelength which is preferentially absorbed by the additive, a photo-cell detector 30 to receive UV light transmitted through said UV transparent section, comparison means 23 for comparing the intensity of light emitted by the UV source with that received by the photo-cell detector, a data store 23 which stores information relating the concentration level of additive with the absorption of light at said known wavelength, and dosing means 21 operable to introduce additive to the liquid circulation system when the measured concentration level is below the desired minimum concentration level.

## Description

This invention relates to the monitoring and control of a liquid additive and in particular, though not exclusively, to the monitoring and control of the concentration of an additive such as a nitrite based chemical inhibitor employed for the suppression of corrosion in the liquid cooling system of a heat generating apparatus such as a diesel engine, compressor, electric propulsion system or industrial processing installation.

The invention provides a method and apparatus for performing said monitoring and control.

In the case, for example, of a modern diesel engine or a compressor and from which excess heat is to be removed by circulation of a liquid coolant, such as water, the presence of a variety of metals and alloys exposed to the coolant leads to a significant potential risk of unacceptable corrosion. If corrosion does occur there is a significant risk of metal loss and weakening, contamination of the coolant, damage or rapid wear of a circulation pump, and build up of sludge which adversely affects heat transfer rates.

To avoid the potentially damaging effects of corrosion it is important to provide in the coolant a suitable coolant inhibitor. It is important also to ensure that the inhibitor is provided at a correct concentration, and maintained at that concentration. If the concentration is or becomes too low corrosion will occur. If the concentration is too great damaging effects can arise on components such as rubber seals and hoses which form part of the coolant system. In addition the excess use of inhibitor is uneconomic.

It is known to monitor the concentration of an inhibitor in a coolant system by a so-called "wet testing" procedure in which a sample of the coolant is taken and subject to colorimetric analysis.

However there are disadvantages to this procedure, these including:-
Poor accuracy - the testing involves counting drops and looking for a colour change. Accuracy is dependent on measurement of sample volume, concentration and age of reagents, accurate counting of the number of drops which have been added and an individual's perception of the colour change. Thus because of any inaccuracy of measurement either an excess or insufficient inhibitor may then be added to the coolant system.
The test procedure is time consuming and this can discourage maintenance staff from conducting tests sufficiently frequently.
Often there is exposure to hazardous chemicals.
It may be necessary for coolant samples to be taken from coolant whilst the coolant system is in operation. The heat of the system, and pressure levels within the system, can lead to a risk of scalding and also damage to the coolant system.

The present invention seeks to provide an improved method of and apparatus for the monitoring and control of a liquid additive in a coolant system in which at least some of the aforedescribed disadvantages of the currently known techniques are mitigated or overcome.

According to one aspect of the present invention there is provided a method for monitoring and control of the concentration of an additive in a liquid circulation system wherein said additive is of a type which preferentially absorbs UV (ultra violet) radiation at a known wavelength, said method comprising:-
providing the liquid circulation system with a UV transparent section through which the liquid circulates;
providing a UV light source to direct light through the UV transparent section;
providing a photo-cell detector at a position to receive UV light transmitted through said UV transparent section;
comparing the intensity of UV light emitted by the UV source with that received by the photo-cell to determine the absorption of UV light passing through the UV transparent section;
providing a data store which stores information relating the absorption of light of said known wavelength with the concentration of the additive in the liquid circulation system;
employing said data store to establish the concentration level of additive present in the liquid circulation system;
comparing said concentration level with a desired minimum concentration level;
providing dosing means in communication with the liquid circulation system, and
operating said dosing means to introduce additive into the liquid circulation system when the measured concentration is below the desired minimum concentration level.

Either on a permanent basis or at least when the liquid circulation system is in operation to circulate liquid the method of the present invention may be operated continuously or it may be operated automatically at predetermined time intervals.

The method may be performed in a manner in which, in the event of a low concentration being detected, the dosing means operates to introduce a measured quantity of additive which is directly related to the difference between the measured and desired concentration levels or it may be operated in a substantially continuous manner either continually to feed a small quantity of additive to the system or prescribed quantities at set intervals of time until the measured concentration level attains said desired minimum concentration level.

According to another aspect of the present invention there is provided a monitoring and control apparatus for monitoring and controlling the concentration of an additive in a liquid circulation system, said apparatus comprising a UV (ultra violet) transparent section through which, in use, liquid circulates, a UV light source to direct light to the UV transparent section at a wavelength which is preferentially absorbed by the additive, a photo-cell detector to receive UV light transmitted through said UV transparent section, comparison means for comparing the intensity of light emitted by the UV source with that received by the photo-cell detector, a data store which stores information relating the concentration level of additive with the absorption of light at said known wavelength, and dosing means operable to introduce additive to the liquid circulation system when the measured concentration level is below the desired minimum concentration level.

Preferably the apparatus further comprises a microprocessor for controlling operation of the successive method steps and for control of the dosing means.

The invention further teaches the provision of a second light source, which may be a source of ultra violet or visible light which is directed through the UV transparent section to the aforementioned, first photo cell or a second photo cell in the vicinity of the first photo cell, said transmitted light being white light or light at a wavelength or range of wavelengths additional to or different from that wavelength of the light emitted by the aforementioned, first, light source. The second light source thus may be employed to establish the effect of absorption by the background colour (typically derived from soluble and insoluble metal corrosion products) of liquid in the coolant system. The microprocessor means may be employed to perform an automatic compensation function such that the measured absorption level of light from the first light source, being the light source of a wavelength preferentially absorbed by the additive, is adjusted to take into account the extent to which the light from that first light source may have been absorbed by any background coloration of the circulated liquid, typically coloration derived from soluble and insoluble metal corrosion products.

Instead of providing two photo cells respectively to receive light from the first and second sources, the light sources may be powered sequentially such that a single photo cell sequentially receives light from the two sources.

A third light source may be provided to emit light at either a single or plurality of wavelengths in a direction angled, for example at right angles, relative to the direction at which the first light source emits light through the UV transparent section of the liquid circulation system. The photo cell(s) may then be employed to establish the extent to which light transmitted through the UV transparent section is scattered by the presence of small particles suspended in the circulating liquid. The microprocessor means may be employed to apply a correction to the absorption measurements to take into account the effects of any such scatter and thereby more accurately establish the requirement for the dosing means to introduce additional additive to the liquid circulation system.

The or each light source may be comprised by a light emitting diode (LED).

The method and apparatus for the present invention as described herein are particularly suitable for use with the cooling water system of an engine or other equipment which generates excess heat for the purpose of enabling the engine or other equipment to be operated at the desired temperature, for example to ensure efficiency of operation and avoid undue wear of component parts.

A particularly suitable type of inhibitor is found to be one based on nitrites, for example sodium nitrite. Tests undertaken to establish the absorption of light by both a nitrite based inhibitor and a sodium nitrite standard solution showed a peak of absorption at 350 nm (nano metres). In contrast, and again using a broad spectrum spectrometer, it was found also that other items such as borate, which are typically found in commercial inhibitors, gave no significant absorption of light having a wavelength of 350 nm.

The UV transparent section may be formed of any transparent material provided that it has an adequate resistance to degradation of the liquid passing therethrough. Thus whilst in some cases a transparent plastics material may be employed, in general a silica glass will be preferred.

From the foregoing it will be understood that the present invention facilitates the provision of a method and apparatus in which the concentration of a corrosion inhibitor such as sodium nitrite may be effectively monitored and maintained without the aforementioned disadvantages associated with the "wet testing" procedure. This is achieved in effect by the facility for in-line testing of the concentration, without the need to remove a sample of coolant for wet testing, and by the means for accurately measuring that concentration level and accurately administering the required quantity of sodium nitrite by control of the dosing means.

The apparatus may of a kind in which the microprocessor and other component parts such as the light source(s) and dosing pump are powered by an external low voltage power source. The apparatus may provide an output signal in analogue or digital format such as 4-20mA, RS232, RS422 or RS485 and may use for example one of the common protocols such as Modbus or ProfiBus. The output signal may be employed for connection to an external management system which in turn controls the dosing pump system or other functions of the cooling system.

The apparatus may comprise a visual display such as a graphic or alpha numeric display to display the measured concentration level of additive and any other system information such as fault status.

The apparatus may comprise means such as a calibration potentiometer for calibrating to take into account, for example, differences between an originally installed and a replacement UV or other light source or characteristics of a glass tube or the like provided for the UV transparent section.

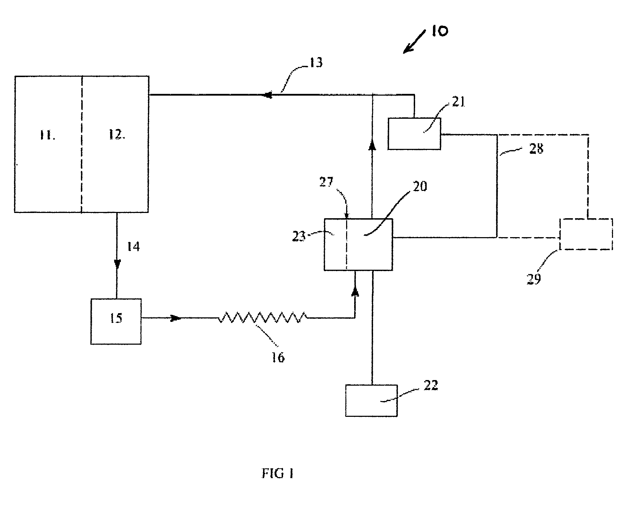

One embodiment of the present invention will now be described, by way of example only, with reference to the accompanying diagrammatic drawings in which:-
Figure 1 is a schematic view of an installation comprising apparatus in accordance with the present invention;
Figure 2 is a front view of a sensor of apparatus in accordance with the present invention;

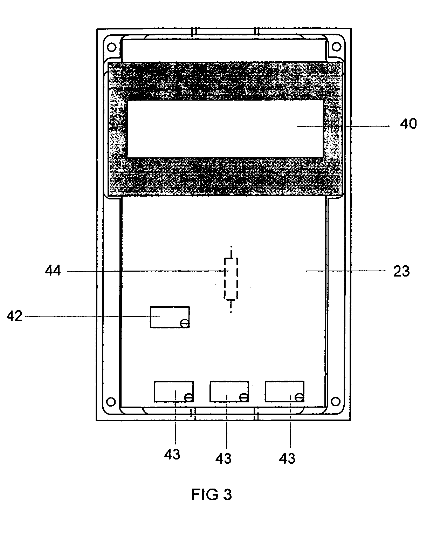

Figure 3 is a view similar to that of Figure 1 with a front panel and end connectors removed, and
Figure 4 is a section on the line 4-4 of Figure 2.

An installation 10 comprises a marine diesel engine 11 which incorporates a cooling water jacket 12 to which coolant is fed via a feed pipe 13 and exits via a return pipe 14 to a circulation pump 15. Coolant is pumped from the pump 15 to a heat exchanger 16.

Provided between the heat exchanger 16 and the feed pipe 13 there is an inhibitor monitoring and control unit 27 comprising a sensor unit 20 which connects an output signal to a dosing pump 21 via connection 28 or, optionally, via an external control system 29.

The control unit is powered by a low voltage source 22.

The cooling system comprises a coolant of water which contains sodium nitrite for the purpose of corrosion inhibition, the sodium nitrite being at a concentration level of approximately 1800mg per litre of coolant.

The control unit 27 additionally comprises an electronic control board comprising a microprocessor 23 or similar functional element which incorporates a data store, internal power supplies and other circuitry for generating an output signal related to the measured level of inhibitor.

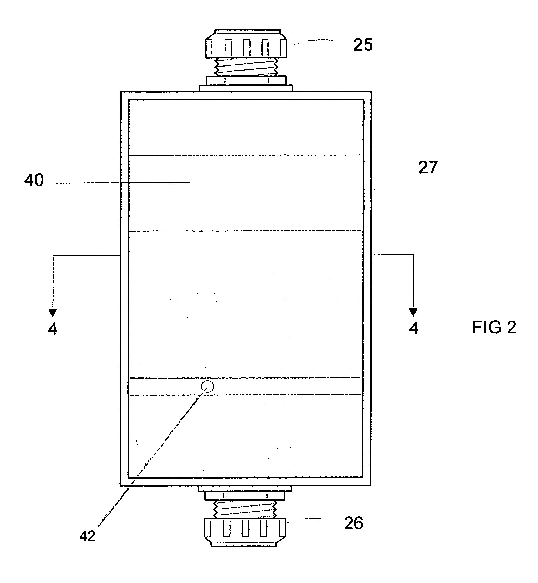

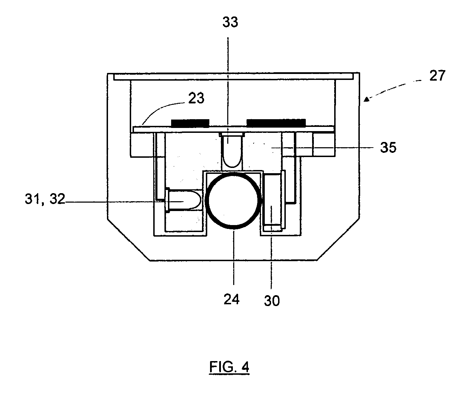

The sensor unit 20 of the control unit 27 comprises a glass tube 24 (see Figure 4) which lies between two end connectors 25, 26 (see Figure 2) that enable the sensor unit to be installed with the tube mounted in an in-line configuration in the coolant circuit for flow of coolant therethrough.

The sensor unit 20 comprises a single photo cell detector 30 (see Figure 4) which is positioned to receive light from each one of three LED light sources 31,32,33.

Two of the light sources, 31, 32 are positioned close together to lie diametrically opposite to the photo cell 30 and to direct light directly towards the photo cell. The third light source, 33 is positioned between the photo cell and said other two light sources to direct light into the tube in a direction perpendicular to the direction in which said other two light sources direct light to the photo cell.

The microprocessor 23 controls operation of the light sources in a manner in which they are each operated sequentially such that the photo cell 30 receives light in turn from each of the three sources. A first of the light sources 31 is an LED which emits light substantially only at a wavelength of 350nm, being the wavelength at which the sodium nitrite preferentially absorbs ultra violet light. The second light source 32 emits monochromatic light at one or more wavelengths different from that emitted by the first light source 31. The third light source 33 emits white light.

The processor 23 compares the intensity of light emitted by the first source 31 with the intensity of light received by the photo cell 30 and having the wavelength 350nm. It then processes that information to establish an apparent percentage degree of absorption of that wavelength. When the second LED 32 is activated the processor 23 functions in a substantially similar manner to establish the degree to which other wavelengths are absorbed by the coolant, for example in consequence of background coloration of the coolant. Furthermore the processor 23 acts again in a similar manner when the third LED 33 is powered in order to establish the extent to which light is scattered by particles within the coolant, thus establishing the extent to which the light received from the first lamp 31 may have been affected by sideways scattering such that not all of the light initially directed towards the photo cell detector 30 has been available for absorption by the sodium nitrite.

Information regarding the absorption of light from the second light source 32 and scattering of light from the third light source 33 is then processed via a data store within the processor 23 to provide a correction factor to the apparent percentage of absorption by the sodium nitrite of light transmitted from the first source 31 to the photo cell 30 thereby to establish a corrected percentage absorption. That corrected percentage absorption is then employed within the processor to establish the percentage concentration of sodium nitrite concomitant with that corrected measured degree of absorption. The processor further displays the measured concentration of sodium nitrite at the display panel 40.

The dosing pump may be of a variable speed type and the processor 22 may provide to the pump a signal which causes operation of a pump at a speed which is related to the extent to which the concentration of inhibitor is below the required level of concentration.

Although the present invention avoids the need for wet testing, periodically a sample of coolant may be taken for chemical analysis to determine the actual percentage concentration of sodium nitrite in the coolant. That may then be compared with the corrected measured value as determined under the action of the processor 23. In the event of any difference between the measured value and that obtained by analysis a calibration potentiometer 42 may be adjusted to bring the measured value into agreement with the actual value.

For the purpose of initial set up of the apparatus the sensor unit additionally incorporates potentiometers 43, for example to compensate for characteristics of the glass tube and the respective LED lights sources and photo cell. Furthermore, the sensor unit 20 may incorporate a temperature sensor 44 which senses the temperature of the coolant. Temperature information is then transmitted to the processor 23 which may employ that information for purpose of a further, temperature, correction of the light absorption reading obtained by the photo cell.

Although the invention provides particular advantages and benefits for monitoring the percentage concentration of a coolant such as sodium nitrite in the cooling system of apparatus such as an engine which generates excess heat, it is to be understood that the invention may be applied also to monitoring for the presence of additives other than inhibitors in other liquid circulation systems.

## Claims

1. A method for monitoring and control of the concentration of an additive in a liquid circulation system wherein said additive is of a type which preferentially absorbs UV (ultra violet) radiation at a known wavelength, **characterised in that** said method comprises:-
providing the liquid circulation system (13,14) with a UV transparent section (24) through which the liquid circulates;
providing a UV light source (31) to direct light through the UV transparent section;
providing at least a first photo-cell detector (30) at a position to receive UV light transmitted through said UV transparent section;
comparing the intensity of UV light emitted by the UV source with that received by the photo-cell to determine the absorption of UV light passing through the UV transparent section;
providing a data store (23) which stores information relating the absorption of light of said known wavelength with the concentration of the additive in the liquid circulation system;
employing said data store to establish the concentration level of additive present in the liquid circulation system;
comparing said concentration level with a desired minimum concentration level;
providing dosing means (21) in communication with the liquid circulation system, and operating said dosing means to introduce additive into the liquid circulation system when the measured concentration is below the desired minimum concentration level.

2. A method according to claim 1 **characterised in that**, in the event of a low concentration being detected, the dosing means (21) operates to introduce a measured quantity of additive which is directly related to the difference between the measured and desired concentration levels.

3. A method according to claim 1 **characterised in that**, in the event of a low concentration being detected, the dosing means (21) operates in a substantially continuous manner continually to feed a small quantity of additive to the system until the measured concentration level attains said desired minimum concentration level.

4. A method according to claim 1 **characterised in that**, in the event of a low concentration being detected, the dosing means (21) operates to introduce prescribed quantities of additive to the system at set intervals of time until the measured concentration level attains said desired minimum concentration level.

5. A method according to any one of the preceding claims and **characterised in that** it comprises provision of a second light source (32) from which light is transmitted through the UV transparent section, said transmitted light being at a wavelength or range of wavelengths additional to or different from that wavelength of the light emitted by the first light source (31).

6. A method according to claim 5 **characterised in that** the light from said second light source (32) is directed through the UV transparent section to said first photo- cell (30) or to a second photo-cell provided in the vicinity of the first photo-cell.

7. A method according to claim 5 or claim 6 **characterised in that** the light sources (30,31) are powered sequentially whereby the photo-cell detector (30) sequentially receives light from two light sources.

8. A method according to any one of the preceding claims and **characterised in that** comprises provision of an auxiliary light source (33) which emits light in a direction angled relative to the direction in which said UV light source (31) emits light through the UV transparent section of the liquid circulation system.

9. A method according to claim 8 **characterised in that** a photo-cell (30) is employed to establish the extent to which light transmitted through the UV transparent section is scattered by the presence of particles suspended in the circulating liquid.

10. A method according to claim 11 or claim 12 **characterised in that** a microprocessor (23) is provided and employed to apply a correction to the absorption measurements to take into account the effects of any scatter of transmitted light due to the presence of particles suspended in the circulating liquid.

11. A monitoring and control apparatus for monitoring and controlling the concentration of an additive in a liquid circulation system, **characterised in that** said apparatus comprises a UV (ultra violet) transparent section (24) through which, in use, liquid circulates, a UV light source (31) to direct light to the UV transparent section at a known wavelength which is preferentially absorbed by the additive, a photo-cell detector (30) to receive UV light transmitted through said UV transparent section, comparison means (23) for comparing the intensity of light emitted by the UV source with that received by the photo-cell detector, a data store which stores information relating the concentration level of additive with the absorption of light at said known wavelength, and dosing means (21) operable to introduce additive to the liquid circulation system when the measured concentration level is below the desired minimum concentration level.

12. Apparatus according to claim 11 and **characterised in that** it comprises a second light source (32) operable to direct light through the UV transparent section to said photo-cell detector (30) or a second photo-cell.

13. Apparatus according to claim 11 or claim 12 and **characterised in that** it comprises an auxiliary light source (33) operable to emit light in a direction angled relative to the direction at which said UV light source (32) emits light through the UV transparent section of the liquid circulation system.

14. Apparatus according to claim 13 and **characterised in that** it comprises microprocessor (23) operable to apply a correction to the absorption measurements to take into account the extent to which light transmitted through the UV transparent section is scattered by the presence of particles suspended in the circulating liquid.

15. Apparatus according to any one of claims 11 to 14 and **characterised in that** it comprises calibration means to compensate for or take into account differences between an originally installed and a replacement UV or other light source (31,32), or an originally installed and a replacement photocell detector (30), or an originally installed component (24) of the UV transparent section and a replacement thereof.
